# EUROPÄISCHE PATENTANMELDUNG

(11) **EP 0 814 085 A1**
(43) Veröffentlichungstag der Anmeldung: **29.12.1997**
(21) Anmeldenummer: 97109379.4
(22) Anmeldetag: 10.06.1997
(51) Int. Cl.: C07F 9/6574

(54) **Verfahren zur Herstellung der Alpha-Kristall-Modifikation des 2,2',2"-Nitrilo-[triethyl-tris(3,3',5,5'-tetra-tert.-butyl-1,1'biphenyl-2,2'-diyl)phosphits]**

(30) Priorität: 19.06.1996 DE 19624424
(71) Anmelder: HOECHST AKTIENGESELLSCHAFT, 65929 Frankfurt am Main (DE)
(72) Erfinder: Kleiner, Hans-Jerg, Dr., 61476 Kronberg (DE); Pfahler, Gerhard, Dr., 86169 Augsburg (DE)

(57) **Zusammenfassung**

Die vorliegende Erfindung bezieht sich auf ein Verfahren zur Herstellung der α-Kristall-Modifikation des 2,2',2''-Nitrilo[triethyl-tris(3,3',5,5'-tetra-tert.-butyl-1,1'-biphenyl-2,2'-diyl)phosphits] (abgekürzt NTTBP) der Formel 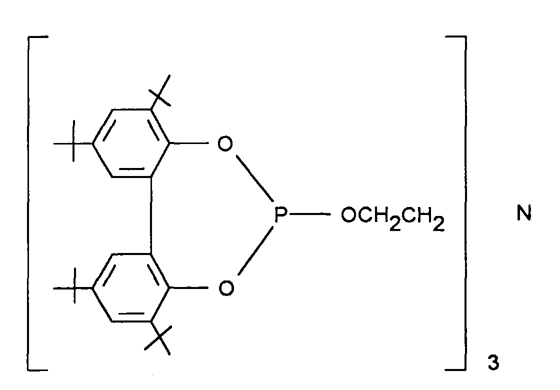 worin man das NTTBP in Form seiner Schmelze, seiner amorphen Festphasenmodifikation oder seiner β-Kristall-Modifikation in kurzkettigen Ketonen mit 3 bis 7 C-Atomen wie Methylethylketon oder insbesondere Aceton in der Wärme bei 40 bis 100°C löst und anschließend durch Abkühlen auf Raumtemperatur zur Kristallisation bringt.

## Beschreibung

2,2',2''-Nitrilo[triethyl-tris(3,3',5,5'-tetra-tert.-butyl-1,1'-biphenyl-2,2'-diyl)phosphit] (abgekürzt NTTBP) ist ein wertvoller Stabilisator für Polymere (siehe US 4,318,845 und US 4,374,219) und kommt außer in amorpher Festphasenmodifikation (US 5,276,076 und US 5,373,040) in drei verschiedenen kristallinen Modifikationen vor (α-Modifikation WO 94/12509, β-Modifikation WO 94/12508 und γ-Modifikation WO 95/03587).

NTTBP wird bisher nach US 4,318,845 (Beispiel 4) so hergestellt, daß man in einem ersten Verfahrensschritt ausgehend von Phosphortrichlorid und 2,2',4,4'-Tetra-tert.-butyl-o,o'-bisphenol 6-Chlor-2,4,8,10-tetra-tert.-butylbenzo[d,f][1,3,2]dioxaphosphepin (abgekürzt Chlor-Phosphit) in Lösung herstellt und in die Lösung ein Gemisch aus Triethanolamin und Triethylamin eintropft. Nach beendeter Umsetzung wird von Triethylaminhydrochlorid abgesaugt und das Lösungsmittel destillativ entfernt. Das NTTBP verbleibt als Rohprodukt in der amorphen Festphasenmodifikation. Nach zweimaliger Umkristallisation aus Acetonitril/Toluol erhält man NTTBP als weißes Pulver mit einem Schmelzpunkt von 121-134°C in einer Ausbeute von nur knapp über 70 %, was nicht sehr befriedigend ist.

Eigene Untersuchungen ergaben, daß NTTBP, nach dieser Methode hergestellt, im wesentlichen in der α-Modifikation vorliegt. Um die α-Modifikation in völlig reiner Form zu gewinnen, ist es entsprechend WO 94/12509 erforderlich, das Material mit einem Schmelzpunkt von 121-134°C mit Hilfe bestimmter Lösungsmittel oder Lösungsmittelgemische wie z.B. Ethylacetat, Toluol/Isopropanol oder Diethylether erneut umzukristallisieren.

Insgesamt liegt die α-Kristall-Modifikation des NTTBP erst nach dreimaliger Umkristallisation in einer für den Einsatz voll befriedigenden Reinheit vor.

Es bestand daher ein Bedarf nach einem Verfahren, das die α-Kristall-Modifikation des NTTBP in technisch einfacher Weise und befriedigender Ausbeute zugänglich macht.

Die Aufgabe wird gelöst durch ein Verfahren zur Herstellung der α-Kristall-Modifikation des NTTBP der Formel 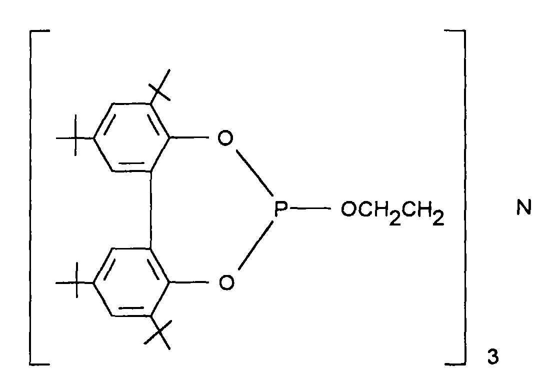 dadurch gekennzeichnet, daß man das NTTBP in Form seiner Schmelze, seiner amorphen Festphasenmodifikation oder seiner β-Kristall-Modifikation in kurzkettigen Ketonen mit 3 bis 7 C-Atomen in der Wärme bei 40 bis 100°C, insbesondere bei 50 bis 70°C, löst und anschließend durch Abkühlen auf Raumtemperatur zur Kristallisation bringt.

Als kurzkettige Ketone seien insbesondere Methylethylketon und Aceton genannt. Besonders bevorzugt ist Aceton.

Das erfindungsgemäße Verfahren gestattet den Einsatz des bei dem Herstellverfahren gemäß US 4,318,845 bzw. US 4,374,219 anfallenden Rohproduktes. Besonders bevorzugt ist das Rohprodukt, wie es gemäß dem Verfahren aus Beispiel 1 (Vorlegen der Mischung aus Triethanolamin und Triethylamin, Zudosieren der Chlorphosphit-Lösung) anfällt.

Weiterhin gestattet das erfindungsgemäße Verfahren die Umwandlung der β-Kristall-Modifikation in die α-Kristall-Modifikation. Die Herstellung der β-Modifikation ist in der eingangs erwähnten WO 94/12508 beschrieben.

### Beispiel 1

24,32 g (0,163 Mol) Triethanolamin und 49,48 g (0,489 Mol) Triethylamin werden in 200 ml o-Xylol und 50 ml Tetrahydrofuran gelöst. In diese Mischung wird bei -5 bis 0°C unter Rühren während 75 Minuten eine 60°C warme Lösung von 232 g (0,489 Mol) Chlor-Phosphit in 800 ml o-Xylol getropft. Nach beendeter Zugabe wird auf Raumtemperatur erwärmt und etwa 60 Stunden nachgerührt. Dann wird abgesaugt und mit o-Xylol nachgewaschen. Das Filtrat wird bei Normaldruck destilliert bis zu einer Innentemperatur von 160 - 176°C. Man läßt die anfallende Schmelze dann schnell in 500 ml Aceton zufließen. Man erhält eine klare Lösung, das NTTBP kristallisiert beim Abkühlen aus, wird abgetrennt und mit Aceton nachgewaschen, dann im Vakuum bei 50°C getrocknet. Man erhält 224,4 g mit einem Schmelzpunkt von 154-158°C (Reinheitsgrad nach 31-PNMR: 99,4 %ig) der α-Modifikation. Das entspricht einer Ausbeute von 94 % der Theorie.

### Beispiel 2

10 g β-Kristall-Modifikation (Schmelzpunkt: 205°C) werden in 300 ml Aceton unter Rückflußbedingungen gelöst. Dann wird die Lösung auf Raumtemperatur gekühlt. Nach beendeter Umkristallisation wird abgesaugt. Man erhält 7,5 g α-Kristall-Modifikation mit einem Schmelzpunkt von 162 - 164°C. Das entspricht einer Ausbeute von 75 % der Theorie.

### Beispiel 3

50 g β-Kristall-Modifikation (Schmelzpunkt: 205°C) werden in 150 ml Aceton Methylethylketon bei ca. 70 °C gelöst. Dann wird die Lösung auf Raumtemperatur gekühlt. Nach längerem Stehen kristallisiert die α-Kristall-Modifikation aus. Das Produkt wird abgesaugt und im Vakuum bei 80 °C getrocknet. Man erhält 35 g mit einem Schmelzpunkt von 148 - 153 °C. Das entspricht einer Ausbeute von 70 % der Theorie.

## Patentansprüche

1. Verfahren zur Herstellung der α-Kristall-Modifikation des 2,2',2''-Nitrilo[triethyl-tris(3,3',5,5'-tetra-tert.-butyl-1,1'-biphenyl-2,2'-diyl)phosphits] (abgekürzt NTTBP) der Formel 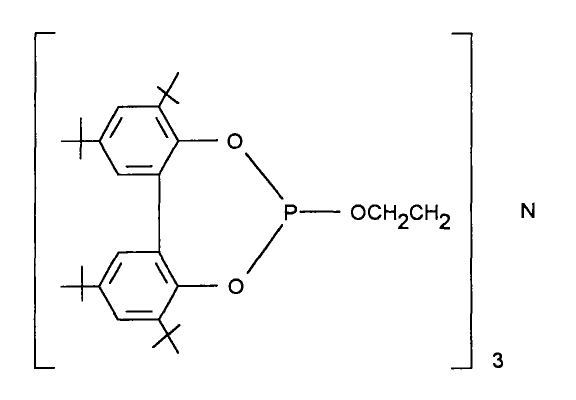 dadurch gekennzeichnet, daß man NTTBP in Form seiner Schmelze, seiner amorphen Festphasenmodifikation oder seiner β-Kristall-Modifikation in kurzkettigen Ketonen mit 3 bis 7 C-Atomen in der Wärme bei 40 bis 100°C löst und anschließend durch Abkühlen auf Raumtemperatur zur Kristallisation bringt.

2. Verfahren gemäß Anspruch 1, dadurch gekennzeichnet, daß als kurzkettiges Keton Methylethylketon, insbesondere Aceton, verwendet wird.
